# EUROPEAN PATENT APPLICATION

(11) **EP 4 574 857 A1**
(43) Date of publication of application: **25.06.2025**
(21) Application number: 23219474.6
(22) Date of filing: 21.12.2023
(51) Int. Cl.: C08F 265/06, C08L 51/00

(54) **(METH)ACRYLIC COMPOSITION, METHOD FOR PRODUCING SAID COMPOSITION AND USES THEREOF**

(71) Applicant: ARKEMA FRANCE, 92800 Puteaux (FR)
(72) Inventor: JEON, Jeong-Woo, 150-874 SEOUL (KR)
(74) Representative: Arkema Patent

(57) **Abstract**

The present invention relates to a (meth)acrylic composition suitable for preparing a (meth)acrylic thermoplastic polymeric composition, a process for preparing the (meth)acrylic composition and relates also to a material obtained by polymerization of such a (meth)acrylic composition.

In particular the present invention relates to a (meth)acrylic composition suitable for preparing a (meth)acrylic thermoplastic polymeric composition, said (meth)acrylic composition is comprising a liquid polymerizable (meth)acrylic syrup, an impact modifier or toughening agent and optionally an initiating system for starting polymerization of said composition, a process for preparing the (meth)acrylic composition and the (meth)acrylic material obtained by polymerization of such a (meth)acrylic composition.

The invention also relates to a (meth)acrylic composite material comprising the polymerized (meth)acrylic composition, a method for preparing such (meth)acrylic composite material comprising and an object comprising such (meth)acrylic composite material comprising the polymerized (meth)acrylic composition.

The invention relates as well to a (meth)acrylic composition suitable for preparing a (meth)acrylic thermoplastic polymeric composition or a (meth)acrylic composite material comprising the polymerized (meth)acrylic composition for applications and uses requiring a low dielectric constant.

## Description

### [Field of the invention]

The present invention relates to a (meth)acrylic composition suitable for preparing a (meth)acrylic thermoplastic polymeric composition, a process for preparing the (meth)acrylic composition and relates also to a material obtained by polymerization of such a (meth)acrylic composition.

In particular the present invention relates to a (meth)acrylic composition suitable for preparing a (meth)acrylic thermoplastic polymeric composition, said (meth)acrylic composition is comprising a liquid polymerizable (meth)acrylic syrup, an impact modifier or toughening agent and optionally an initiating system for starting polymerization of said composition, a process for preparing the (meth)acrylic composition and the (meth)acrylic material obtained by polymerization of such a (meth)acrylic composition.

The invention also relates to a (meth)acrylic composite material comprising the polymerized (meth)acrylic composition, a method for preparing such (meth)acrylic composite material comprising and an object comprising such (meth)acrylic composite material comprising the polymerized (meth)acrylic composition.

The invention relates as well to a (meth)acrylic composition suitable for preparing a (meth)acrylic thermoplastic polymeric composition or a (meth)acrylic composite material comprising the polymerized (meth)acrylic composition for applications and uses requiring a low dielectric constant.

### [Technical problem]

Recently, in accordance with the high-capacity and high-speed transmission of large-capacity information in electronic devices, signal transmission in a higher frequency region is being performed. In order to cope with the high transmission loss in the highfrequency region, a material technology characterized by low dielectric constant and low dielectric loss tangent is required.

Accordingly, development of materials exhibiting insulating properties with a lower dielectric constant and dielectric loss coefficient than those of conventional insulators is being conducted.

As if reflecting such a trend, various attempts have been made to develop materials with low dielectric properties using thermosetting and thermoplastic organic materials.

Among them, there is a movement to apply an insulator that has a lower dielectric constant than a composite material using a thermosetting material such as epoxy and which is less affected by moisture absorption.

In addition, with the introduction of thermoplastic resins, the demand for the development of low dielectric constant (Dk) materials with recycling performance is increasing.

Accordingly, LCPs (liquid crystal polymers, Dk of about 2.9) and polyamides (Dk of about 3.2) made of wholly aromatic Polyester have been studied. And, among other acrylic polymers, it was found that (meth)acrylic polymers polymerized from methyl methacrylate (MMA) such as poly methyl methacrylate (PMMA) (Dk of about 3.0) have medium to high thermal stability and no field effect current. However, since PMMA is a solid material and has limitations in the production process compared to liquid resin. For that reason, PMMA has not been applied to various low dielectric application fields so far.

Compositions comprising (meth)acrylic polymers are widely used. This is mainly due to the characteristic that these polymers are highly transparent polymer materials with excellent resistance to ultraviolet radiation and weathering. However (meth)acrylic polymers are also used in applications where the transparency is not necessarily required, as for example in thermoplastic applications and polymeric composites.

A composite material is a macroscopic combination of two or more non-miscible materials. The composite material constitutes at least of a matrix material that forms a continuous phase for the cohesion of the structure and a reinforcing material or added filler with various architectures for the mechanical properties or other properties.

The aim in using composite materials is to achieve a performance from the composite material that is not available from its separate constituents if used alone. Consequently, composite materials are widely used in several industrial sectors as for example building, automotive, nautical or marine, aerospace, transport, leisure, electronics, and sport notably due to their better mechanical performance (higher tensile strength, higher tensile modulus, and higher fracture toughness) in comparison with homogenous materials and their low density.

The most important class in view of volume in commercial industrial scale, are composites with organic matrices, where the matrix material is a generally polymer. The principal matrix or continuous phase of a polymeric composite material is either a thermoplastic polymer or a thermosetting polymer.

One way for preparing a (meth)acrylic thermoplastic polymeric composition or a polymeric (meth)acrylic composite material based on thermoplastic polymers is by using a liquid polymer composition comprising a (meth)acrylic monomer, commonly known as a "syrup". Such a syrup is used for filling a mould of blending with a mineral filler or for impregnating the reinforcing material, for example a fibrous substrate; followed by polymerizing.

At the end of the use of the object or the article comprising the (meth)acrylic thermoplastic polymer composition or material or the (meth)acrylic composite material, said object or article should be easily recyclable.

There is a need of a composition that can be transformed into a polymeric thermoplastic polymer composition that possesses a low dielectric constant and that can be recycled.

There is also a need of a composition that can be transformed into a polymeric thermoplastic polymeric composite that possesses a low dielectric constant and that can be recycled.

There is also a need of a polymeric thermoplastic polymer composition that possesses a low dielectric constant and that can be recycled, while having relatively low material costs, which can be thermoformed, comprises a low content of potential hazardous products.

There is also a need of process to prepare a composition that can be that can be transformed into a polymeric thermoplastic polymer composition that possesses a low dielectric constant and that can be recycled.

Another aim of the present invention is to propose a process for manufacturing a polymeric thermoplastic polymer composition that possesses a low dielectric constant and that can be recycled, while having relatively low material costs, which can be thermoformed, comprises a low content of potential hazardous products.

Still another aim of the present invention is to propose a process for manufacturing an object comprising a thermoplastic composite material that possesses a low dielectric constant and that can be recycled, while having relatively low material costs, which can be thermoformed, comprises a low content of potential hazardous products.

### [BACKGROUND OF THE INVENTION]Prior art

The document WO97/32314 discloses a thermoplastic elastomer which may be formulated to have a wide range of dielectric properties. The thermoplastic elastomer material has a thermoplastic polymeric component comprising polypropylene and an elastomeric component comprising ethylene-propylene-diene monomer (EPDM).

The document US 7,026,032 discloses polyimide based compositions useful as electronic substrates. The composition is a polymeric composite comprising a polyimide component and a fluoropolymer component derived from a micro powder.

The document US2006/115670 discloses a thermoplastic polyimide resin film, a multilayer body and method for manufacturing printed wiring board composed of the same.

The document US 7,388,057discloses an epoxy-terminated phenylene ether oligomer can be further reacted acrylic and/or methacrylic acid to yield an epoxy di(meth)acrylate. It is used in the productionof a thermosetting resin or a photocurable resin and its intermediate product each of which is suitable for use in electronics fields requiring a low dielectric constant, a low dielectric loss tangent and high toughness and also suitable for various uses such as coating, bonding and molding.

None of the cited prior art discloses a liquid (meth)acrylic syrup comprising one or more (meth) acrylic polymers, one or more (meth)acrylic monomers and an impact modifier. The cited prior art discloses neither (meth)acrylic thermoplastic polymeric composition comprising an impact modifier that possesses a good compromise between low dielectric constant, strength, stiffness, toughness and impact resistance and heat deflection temperature as well.

### [Brief description of the invention]

Surprisingly it has been found that a (meth)acrylic composition MC1 comprising:
(a) 100 parts by weight of a liquid (meth)acrylic syrup comprising:
   (a₁) from 1% by weight to 50% by weight of one or more (meth)acrylic polymers P1, and
   (a₂) from 50% by weight to 99% by weight of one or more (meth)acrylic monomers M1, each monomer M1 comprising only one (meth)acrylic function per monomer,
(b) from 0.5 parts by weight to 25 parts by weight of an impact modifier IM1,
(c) optionally from 0.01 part by weight to 5 parts by weight of a polymerization initiator
(d) optionally between 100ppm and 10 000ppm of an accelerator;
allows to provide a composition for the preparation of a (meth)acrylic thermoplastic polymeric composition MTPC1 that possesses a low dielectric constant.

Surprisingly it has also been found that a (meth) acrylic composition MC1 comprising:
(a) 100 parts by weight of a liquid (meth)acrylic syrup comprising:
   (a₁) from 1% by weight to 50% by weight of one or more (meth)acrylic polymers P1, and
   (a₂) from 50% by weight to 99% by weight of one or more (meth)acrylic monomers M1, each monomer M1 comprising only one (meth)acrylic function per monomer,
(b) from 0.5 parts by weight to 25 parts by weight of an impact modifier IM1,
(c) optionally from 0.01 part by weight to 5 parts by weight of a polymerization initiator,
(d) optionally between 100ppm and 10 000ppm of an accelerator;
allows to provide a composition for the preparation of a (meth)acrylic thermoplastic polymeric composition MTPC1 that possesses a good compromise between low dielectric constant, and a good compromise between strength, notably tensile strength and flexural strength, stiffness, toughness and impact resistance.

Surprisingly it has also been found that a (meth) acrylic composition MC1 comprising:
(a) 100 parts by weight of a liquid (meth)acrylic syrup comprising:
   (a₁) from 1% by weight to 50% by weight of one or more (meth)acrylic polymers P1, and
   (a₂) from 50% by weight to 99% by weight of one or more (meth)acrylic monomers M1, each monomer M1 comprising only one (meth)acrylic function per monomer,
(b) from 0.5 parts by weight to 25 parts by weight of an impact modifier IM1,
(c) from 0.01 part by weight to 5 parts by weight of a polymerization initiator
(d) between 100ppm and 10 000ppm of an accelerator;
can be used for the preparation for the preparation of a (meth)acrylic thermoplastic polymeric composition MTPC1 that possesses a low dielectric constant.

Surprisingly it has been found that a process for preparing a (meth)acrylic thermoplastic polymeric composition MTPC1, said process is comprising the following steps:
(i)providing the (meth)acrylic composition MC1 comprising:
   (a) 100 parts by weight of a liquid (meth)acrylic syrup comprising:
      (a₁) from 1% by weight to 50% by weight of one or more (meth)acrylic polymers P1, and
      (a₂) from 50% by weight to 99% by weight of one or more (meth)acrylic monomers M1, each monomer M1 comprising only one (meth)acrylic function per monomer,
   (b) from 0.5 parts by weight to 25 parts by weight of an impact modifier IM1,
   (c) from 0.01 part by weight to 5 parts by weight of a polymerization initiator,
   (d) optionally between 100ppm and 10 000ppm of an accelerator;
(ii)polymerizing the (meth)acrylic composition MC1;
yields to a (meth)acrylic thermoplastic polymeric composition MTPC1 that possesses a good compromise between low dielectric constant, strength, stiffness, toughness and impact resistance.

### [Detailed description of the invention]

According to a first aspect, the present invention relates to a (meth)acrylic composition MC1, said composition is comprising:
(a) 100 parts by weight of a liquid (meth)acrylic syrup comprising:
   (a₁) from 1% by weight to 50% by weight of one or more (meth)acrylic polymers P1, and
   (a₂) from 50% by weight to 99% by weight of one or more (meth)acrylic monomers M1, each monomer M1 comprising only one (meth)acrylic function per monomer,
(b) from 0.5 parts by weight to 25 parts by weight of an impact modifier IM1,
(c) optionally from 0.01 part by weight to 5 parts by weight of a polymerization initiator
(d) optionally between 100ppm and 10000ppm of an accelerator.

According to a second aspect, the present invention relates to a (meth)acrylic composition MC1, said composition is comprising:
(a) 100 parts by weight of a liquid (meth)acrylic syrup comprising:
   (a₁) from 1% by weight to 50% by weight of one or more (meth)acrylic polymers P1, and
   (a₂) from 50% by weight to 99% by weight of one or more (meth)acrylic monomers M1, each monomer M1 comprising only one (meth)acrylic function per monomer,
(b) from 0.5 parts by weight to 25 parts by weight of an impact modifier IM1,
(c) from 0.01 part by weight to 5 parts by weight of a polymerization initiator
(d) between 100ppm and 10000ppm of an accelerator.

According to a third aspect, the present invention relates to a process for preparing a (meth)acrylic composition MC1 comprising following steps:
(i) providing component (a) a liquid (meth)acrylic syrup comprising:
   (a₁) from 1% by weight to 50% by weight of one or more (meth)acrylic polymers P1, and
   (a₂) from 50% by weight to 99% by weight of one or more (meth)acrylic monomers M1, each monomer M1 comprising only one (meth)acrylic function per monomer,
(ii) adding for 100 parts of (a) component (b) from 0.5 parts by weight to 25 parts by weight of an impact modifier IM1, optionally component (c) from 0.01 part by weight to 5 parts by weight of a polymerization initiator and optionally component(d) between 100ppm and 10 000ppm of an accelerator,
(iii) mixing the components (a) to (b) or (a) to (d).

According to a fourth aspect, the present invention relates to a process for preparing a (meth)acrylic composition MC1, process is comprising following steps:
(i) providing component (a) a liquid (meth)acrylic syrup comprising:
   (a₁) from 1% by weight to 50% by weight of one or more (meth)acrylic polymers P1, and
   (a₂) from 50% by weight to 99% by weight of one or more (meth)acrylic monomers M1, each monomer M1 comprising only one (meth)acrylic function per monomer,
(ii) adding for 100 parts of (a) component (b) from 0.5 parts by weight to 25 parts by weight of an impact modifier, component (c) from 0.01 part by weight to 5 parts by weight of a polymerization initiator and component(d) between 100ppm and 10 000ppm of an accelerator,
(iii) mixing the components (a) to (d).

According to a fifth aspect the present invention relates to the use of a (meth)acrylic composition MC1 to prepare a material having a low dielectric constant, said (meth)acrylic composition MC1 comprises:
(a) 100 parts by weight of a liquid (meth)acrylic syrup comprising:
   (a₁) from 1% by weight to 50% by weight of one or more (meth)acrylic polymers P1, and
   (a₂) from 50% by weight to 99% by weight of one or more (meth)acrylic monomers M1, each monomer M1 comprising only one (meth)acrylic function per monomer,
(b) from 0.5 parts by weight to 25 parts by weight of an impact modifier,
(c) from 0.01 part by weight to 5 parts by weight of a polymerization initiator
(d) between 100ppm and 10 000ppm of an accelerator.

According to a sixth aspect the present invention relates to a (meth)acrylic thermoplastic polymeric composition MTPC1 prepared by polymerization of the (meth)acrylic composition MC1.

According to a seventh aspect the present the present invention relates to a process for preparing a (meth)acrylic thermoplastic polymeric composition MTPC1, said process comprises the following steps:
(i) providing a (meth)acrylic composition MC1 according to first or second aspect,
(ii) optionally filling or pouring the (meth)acrylic composition MC1 into a mould,
(iii) polymerizing the (meth)acrylic composition MC1.

According to an eight aspect the present the present invention relates to use of a (meth)acrylic composition MC1 to prepare a (meth)acrylic thermoplastic polymeric composition MTPC1 having a low dielectric constant, said (meth)acrylic composition MC1 comprises:
(a) 100 parts by weight of a liquid (meth)acrylic syrup comprising:
   (a₁) from 1% by weight to 50% by weight of one or more (meth)acrylic polymers P1, and
   (a₂) from 50% by weight to 99% by weight of one or more (meth)acrylic monomers M1, each monomer M1 comprising only one (meth)acrylic function per monomer,
(b) from 0.5 parts by weight to 25 parts by weight of an impact modifier,
(c) from 0.01 part by weight to 5 parts by weight of a polymerization initiator
(d) between 100ppm and 10 000ppm of an accelerator.

According to a ninth aspect the present the present invention relates to a process for preparing a (meth)acrylic thermoplastic polymeric composition MTPC1, said process is comprising the following steps:
(i)providing the (meth)acrylic composition MC1 comprising:
   (a) 100 parts by weight of a liquid (meth)acrylic syrup comprising:
      (a₁) from 1% by weight to 50% by weight of one or more (meth)acrylic polymers P1, and
      (a₂) from 50% by weight to 99% by weight of one or more (meth)acrylic monomers M1, each monomer M1 comprising only one (meth)acrylic function per monomer,
   (b) from 0.5 parts by weight to 25 parts by weight of an impact modifier IM1,
   (c) from 0.01 part by weight to 5 parts by weight of a polymerization initiator,
   (d) optionally between 100ppm and 10 000ppm of an accelerator;
(ii)polymerizing the (meth)acrylic composition MC1.

According to a tenth aspect the present the present invention relates to a (meth)acrylic thermoplastic polymeric composition MTPC1 comprising a filler FI1 or a fibrous material FM.

According to an eleventh aspect the present the present invention relates to a (meth)acrylic composite material MCM1 comprising the (meth)acrylic thermoplastic polymeric composition MTPC1.

According to a twelfth aspect the present the present invention relates to an article or object comprising the (meth)acrylic composite material MCM1 or comprising the (meth)acrylic thermoplastic polymeric composition MTPC1.

The term "(meth)acrylic monomer" covers both an acrylic monomer and a methacrylic monomer. Similarly, the term "(meth)acrylic polymer" covers not only an acrylic homopolymer but also a methacrylic homopolymer, an acrylic copolymer and a methacrylic copolymer.

By the term "PMMA" as used are denoted homo- and copolymers of methylmethacrylate (MMA), for the copolymer of MMA the weight ratio of MMA inside the PMMA is at least 50 wt%.

By the term "initiator" as used is denoted a chemical species that forms compound or an intermediate compound that starts the polymerization of a monomer, that to capable of linking successively with a large number of other monomers into a polymeric compound.

By the term "polymer composite" as used is denoted a multicomponent material comprising multiple different phase domains in which at least one type of phase domain is a continuous phase and in which at least one component is a polymer.

By the term "thermoplastic" as used is denoted a polymer that turns to a liquid or becomes more liquid or less viscous when heated and that can take on new shapes by the application of heat and optionally pressure. This applies also for slightly crosslinked thermoplastic polymers that can be thermoformed when heated above the softening temperature.

By the term "low dielectric constant" as used is denoted a value of relative permittivity εᵣ lower than 2.9 at 1GHz.

By saying that a range is from x to y in the present invention, it is meant that the upper and lower limit of this range are included, equivalent to at least x and up to y.

By saying that a range is between x and y in the present invention, it is meant that the upper and lower limit of this range are excluded, equivalent to more than x and less than y.

The liquid (meth)acrylic syrup (a) of the composition according to the invention comprises (a₁) a (meth)acrylic polymer P1 and (a₂) a (meth)acrylic monomer M1.

The liquid (meth)acrylic syrup (a) of the (meth)acrylic composition MC1 of invention comprises between 1wt% and 50wt% of a (meth)acrylic polymer P1 and between 50wt% and 99wt% of a (meth)acrylic monomer M1. Preferably the liquid (meth)acrylic syrup comprises between 2wt% and 50wt% of a (meth)acrylic polymer P1 and between 50wt% and 98wt% of a (meth)acrylic monomer M1, more preferably between 2wt% and 40wt% of a (meth)acrylic polymer P1 and between 60wt% and 98wt% of a (meth)acrylic monomer M1, still more preferably between 3wt% and 40wt% of a (meth)acrylic polymer P1 and between 60wt% and 97wt% of a (meth)acrylic monomer M1, advantageously between 3wt% and 35wt% of a (meth)acrylic polymer P1 and between 65wt% and 97wt% of a (meth)acrylic monomer M1 and more advantageously between 3wt% and 30wt% of a (meth)acrylic polymer P1 and between 70wt% and 97wt% of a (meth)acrylic monomer M1.

The dynamic viscosity of the liquid (meth) acrylic syrup is in a range from 10 mPa*s to 10000 mPa*s, preferably from 20 mPa*s to 7000 mPa*s and advantageously from 20 mPa*s to 5000 mPa*s and more advantageously from 20 mPa*s to 2000 mPa*s and even more advantageously between 20mPa*s and 1000 mPa*s. The viscosity of the syrup can be easily measured with a Rheometer or viscosimeter. The dynamic viscosity is measured at 25°C. If the liquid (meth) acrylic syrup has a Newtonian behaviour, meaning no shear thinning, the dynamic viscosity is independent of the shearing in a rheometer or the speed of the mobile in a viscometer. If the liquid composition has a non-Newtonian behaviour, meaning shear thinning, the dynamic viscosity is measured at a shear rate of 1s⁻¹ at 25°C.

**As regards the liquid (meth)acrylic syrup (a)**, it comprises (a₁) the (meth)acrylic monomer M1 and (a₂) the (meth)acrylic polymer P1. Once the (meth)acrylic composition MC1 has been polymerized, the (meth)acrylic monomer M1 polymerizes and is transformed to a (meth)acrylic polymer P2 comprising the monomeric units of (meth)acrylic monomer M1 and other possible comonomers.

The liquid (meth)acrylic syrup of the (meth)acrylic composition MC1 according to the invention may comprise only one (meth)acrylic polymer P1, but may equally comprise a mixture of two, three or even more (meth)acrylic polymers P1. If there is a mixture of different (meth)acrylic polymer P1, the difference is either the composition of the respective (meth)acrylic polymers P1 or the molecular weight of the respective (meth)acrylic polymer P1 or both. This would be (meth)acrylic polymer P1a, (meth)acrylic polymer P1b, (meth)acrylic polymer P1c and so on

The or each (meth)acrylic polymer P1 included in the liquid (meth)acrylic syrup may in particular be chosen from:
. polyalkyl acrylates which comprise alkyl acrylate homopolymers and alkyl acrylate copolymers, and
. polyalkyl methacrylates which comprise alkyl methacrylate homopolymers and alkyl methacrylate copolymers.

According to a preferred embodiment, the or each (meth)acrylic polymer P1 is a polymethyl methacrylate (PMMA), it being understood that, as indicated above, the polymethyl methacrylate (PMMA) may denote a methyl methacrylate (MMA) homopolymer or an MMA copolymer.

In particular, in the case where the liquid (meth) acrylic syrup comprises a mixture of two or more polymethyl methacrylates P1, this mixture may be formed by mixing at least two MMA homopolymers having a different molecular weight, by mixing at least two MMA copolymers having an identical monomer composition and a different molecular weight, by mixing at least two MMA copolymers having a different monomer composition or by mixing at least one MMA homopolymer and at least one MMA copolymer.

According to a first preferred embodiment the (meth)acrylic polymer P1 is chosen from a methyl methacrylate homopolymer or a methyl methacrylate copolymer or a mixture thereof, methyl methacrylate advantageously representing at least 50% by weight of the or of each (meth)acrylic polymer P1.

According to one embodiment of the invention, methyl methacrylate represents at least 55% by weight of the or each (meth)acrylic polymer P1.

According to another particular embodiment, the (meth)acrylic polymer P1 comprises at least 70%, advantageously at least 80%, preferentially at least 90% and more preferentially at least 95% by weight of methyl methacrylate.

When the (meth)acrylic polymer P1 is a methyl methacrylate (MMA) copolymer, it may comprise at least one comonomer containing at least one ethylenic unsaturation and which is capable of copolymerizing with methyl methacrylate. Among these comonomers, mention may notably be made of acrylic and methacrylic acids and alkyl (meth)acrylates in which the alkyl group contains from 1 to 12 carbon atoms. Alkyl (meth)acrylates means an alkyl ester of acrylic acid or methacrylic acid As examples of comonomers, mention may be made of methyl acrylate and ethyl, butyl or 2-ethylhexyl (meth)acrylate.

Advantageously, the or each (meth) acrylic polymer P1 is a homopolymer of methyl methacrylate or a copolymer of methyl methacrylate and of an alkyl acrylate or an alkyl methacrylate in which the alkyl group contains from 1 to 12 carbon atoms, advantageously from 1 to 6 carbon atoms and preferentially from 1 to 4 carbon atoms.

According to a first preferred embodiment, when the or each (meth)acrylic polymer P1 is a methyl methacrylate (MMA) copolymer, this methyl methacrylate (MMA) copolymer comprises from 70% to 99.9%, advantageously from 80% to 99.9%, preferentially from 90% to 99.9% and more preferentially from 95% to 99.9% by weight of methyl methacrylate and from 0.1% to 30%, advantageously from 0.1% to 20%, preferentially from 0.1% to 10% and more preferentially from 0.1% to 5% by weight of at least one comonomer containing at least one ethylenic unsaturation that can copolymerize with methyl methacrylate. Preferably, the comonomer is chosen from methyl acrylate and ethyl acrylate.

In an advantageous variant of the first preferred embodiment, when the (meth)acrylic polymer P1 is a methyl methacrylate (MMA) copolymer, the (meth)acrylic polymer P1 is a copolymer of methyl methacrylate and of alkyl acrylate.

In a preferred variant of the first preferred embodiment, when the (meth)acrylic polymer P1 is a methyl methacrylate (MMA) copolymer, the (meth)acrylic polymer P1 is a copolymer of methyl methacrylate and of methyl acrylate or ethylacrylate.

According to a second preferred embodiment, when the (meth)acrylic polymer P1 is a methyl methacrylate (MMA) copolymer, this methyl methacrylate (MMA) copolymer comprises from 50% to 99.9%, advantageously from 52% to 99.9%, preferentially from 53% to 99.9% and more preferentially from 55% to 99.9% by weight of methyl methacrylate and from 0.1% to 50%, advantageously from 0.1% to 48%, preferentially from 0.1% to 47% and more preferentially from 0.1% to 45% by weight of at least one comonomer containing at least one ethylenic unsaturation that can copolymerize with methyl methacrylate. Preferably, the comonomer is chosen from methyl acrylate, ethyl acrylate, ethyl methacrylate, propyl acrylate, propyl methacrylate, butyl acrylate or butyl methacrylate.

The weight-average molecular weight, noted as M_{w}, of the or each (meth)acrylic polymer P1 is generally high and may consequently be greater than 40 000 g/mol, advantageously greater than 45 000 g/mol and preferentially greater than 50 000 g/mol. The weight-average molecular weight may be measured by size exclusion chromatography (SEC).

The (meth)acrylic polymer P1, if not crosslinked, usually has a melt mass-flow rate (MFR) ISO 1133-2:2011 (230°C/3.8 kg) of between 0.1 g/10 min and 20 g/10 min or the melt mass-flow rate is between 0.2 g/10 min and 18 g/10 min, or between 0.3 g/10 min and 16 g/10 min or between 0.4 g/10 min and 13 g/10 min.

The liquid (meth)acrylic syrup of the (meth)acrylic composition MC1 according to the invention may comprise only one (meth)acrylic monomer M1, but may equally comprise a mixture of two, three or even more (meth)acrylic monomers M1. This would be (meth)acrylic monomer M1a, (meth)acrylic monomer M1b, (meth)acrylic monomers M1c and so on.

Whether the liquid (meth)acrylic syrup comprises one or more (meth)acrylic monomers M1, the (meth)acrylic monomer M1 comprises only one (meth)acrylic function per monomer.

**As regards the (meth)acrylic monomer (M1)**, the monomer is chosen from alkyl acrylic monomers, alkyl methacrylic monomers, hydroxyalkyl acrylic monomers and hydroxyalkyl methacrylic monomers, and mixtures thereof. Alkyl acrylic monomer or alkyl methacrylic monomer means an alkyl ester of acrylic acid or methecrylic acid.

Preferably, the (meth)acrylic monomer (M1) is chosen from hydroxyalkyl acrylic monomers, hydroxyalkyl methacrylic monomers, alkyl acrylic monomers, alkyl methacrylic monomers and mixtures thereof, the alkyl group containing from 1 to 22 linear, branched or cyclic carbons; the alkyl group preferably containing from 1 to 12 linear, branched or cyclic carbons.

Advantageously, the (meth)acrylic monomer (M1) is chosen from methyl methacrylate, ethyl methacrylate, methyl acrylate, ethyl acrylate, n-butyl acrylate, isobutyl acrylate, n-butyl methacrylate, isobutyl methacrylate, cyclohexyl acrylate, cyclohexyl methacrylate, isobornyl acrylate, isobornyl methacrylate, hydroxyethyl acrylate and hydroxyethyl methacrylate, and mixtures thereof.

According to a preferred embodiment, at least 50% by weight and preferably at least 60% by weight of the (meth)acrylic monomer (M1) is methyl methacrylate.

According to a first more preferred embodiment, at least 50% by weight, preferably at least 60% by weight, more preferably at least 70% by weight, advantageously at least 80% by weight and even more advantageously 90% by weight of the monomer (M1) is a mixture of methyl methacrylate with optionally at least one other monomer.

In a first variant of the invention, the liquid (meth)acrylic syrup comprises:
(a₁) from 3% by weight to 45% by weight and preferentially from 3% by weight to 40% by weight of the (meth) acrylic polymer(s) P1, and
(a₂) from 55% by weight to 97% by weight and preferentially from 60% by weight to 97% by weight of the (meth)acrylic monomer(s) M1.

In a second variant of the invention, the liquid (meth)acrylic syrup comprises:
(a₁) from 3% by weight to 25% by weight and preferentially from 4% by weight to 25% by weight and more preferentially from 5% by weight to 25% by weight and even more preferentially from 5% by weight to 24% by weight of the (meth) acrylic polymer(s) P1, and
(a₂) from 75% by weight to 97% by weight and preferentially from 75% by weight to 96% by weight and more preferentially from 75% by weight to 95% by weight and even more preferentially from 76% by weight to 95% by weight of the (meth) acrylic monomer(s) M1.

In a third variant of the invention, the liquid (meth)acrylic syrup comprises:
(a₁) from 10% by weight to 30% by weight and preferentially from 11% by weight to 28% by weight and more preferentially from 12% by weight to 27% by weight and even more preferentially from 15% by weight to 25% by weight of the (meth) acrylic polymer(s) P1, and
(a₂) from 70% by weight to 90% by weight and preferentially from 72% by weight to 89% by weight and more preferentially from 73% by weight to 88% by weight and even more preferentially from 75% by weight to 85% by weight of the (meth) acrylic monomer(s) M1.

In an advantageous variant, the or each (meth)acrylic polymer P1 and the or each (meth)acrylic monomer M1 of the liquid (meth)acrylic syrup comprise at least one same (meth)acrylic unit, such a variant making it possible to optimize the solubility of the (meth)acrylic polymer(s) P1 in the (meth)acrylic monomer(s) M1.

Preferentially, the or each (meth)acrylic polymer P1 is chosen from a homopolymer of methyl methacrylate or copolymer of methyl methacrylate and of methyl acrylate and a copolymer of methyl methacrylate and of ethyl acrylate or a copolymer of methyl methacrylate and of butyl acrylate or a copolymer of methyl methacrylate and of butyl methacrylate, the respective comonomer being present at most at 45wt% in the copolymer.

Preferentially, the (meth)acrylic monomer M1 is methyl methacrylate.

In a first advantageous variant, the liquid (meth)acrylic syrup comprises a (meth)acrylic polymer P1, rather than a mixture of (meth)acrylic polymers P1.

In a second advantageous variant, the liquid (meth)acrylic syrup comprises a mixture of two (meth)acrylic polymers P1.

In another advantageous variant, the liquid (meth)acrylic syrup comprises a (meth)acrylic monomer M1, rather than a mixture of (meth)acrylic monomers M1.

In a fourth advantageous variant, the liquid (meth)acrylic syrup comprises a mixture of two (meth)acrylic monomers M1.

Stabilizers, or reaction inhibitors, may also be present in the liquid (meth)acrylic syrup to prevent spontaneous polymerization of the (meth)acrylic monomer(s) M1.

These stabilizers may notably be chosen from hydroquinone (HQ), hydroquinone monomethyl ether (HQME), 2,6-di-tert-butyl-4-methylphenol (BHT), 2,6-di-tert-butyl-4-methoxyphenol (Topanol O) and 2,4-dimethyl-6-tert-butylphenol (Topanol A).

These stabilizers may be present, in the liquid (meth)acrylic syrup, in a proportion of not more than 5 parts by weight, advantageously not more than 4 parts by weight and preferentially in a proportion of between 0.3 and 3 parts by weight, per 100 parts by weight of the sum of the (meth)acrylic polymer(s) P1 and of the (meth)acrylic monomer(s) M1.

**As regards the impact modifier IM1**, it can be chosen from a core-shell particle or a block copolymer.

In a first preferred embodiment, the impact modifier IM1 is chosen from a block copolymer BC1.

In a second preferred embodiment, the impact modifier IM1 is chosen from core-shell particles.

In a third preferred embodiment, the impact modifier IM1 is chosen from a mixture of core-shell particles and a block copolymer BC1.

The block copolymer BC1 is present from 0.5 parts by weight to 25 parts by weight in the (meth)acrylic composition MC1 for 100 parts by weight of a liquid (meth)acrylic syrup.

Preferably, the block copolymer BC1 is present from 1 parts by weight to 15 parts by weight, more preferably from 1 parts by weight to 12 parts by weight and still more preferably from 1 parts by weight to 10 parts by weight for 100 parts by weight of a liquid (meth)acrylic syrup.

Most preferably the block copolymer BC1 is present from 2 parts by weight to 10 parts by weight for 100 parts by weight of a liquid (meth)acrylic syrup.

**As regards the block copolymer BC1**, it comprises at least one block having a glass transition temperature Tg less than 20°C preferably less than 10°C and more preferably less than 0°C.

Preferably one of the at least other blocks is having a glass transition temperature Tg more than 20°C, preferably more than 30°C and more preferably more than 40°C.

The block copolymer BC1 can be chosen from a thermoplastic block copolymer TBC1.

Advantageously the block copolymer BC1 is amorphous. More advantageously the block copolymer BC1 does not comprise any semicrystalline or crystalline blocks.

Most preferably the thermoplastic block copolymer TBC1 is a thermoplastic acrylic block copolymer. By this is meant that at least 30%wt%, preferably 40wt% and more preferably 50wt% of the monomers inside thermoplastic acrylic block copolymer are alkyl(meth)acrylate monomers.

Preferably the thermoplastic acrylic block copolymer is having a general formula (A)ₙB in which:
- n is an integer of greater than or equal to 1,
- A is: an acrylic- or methacrylic- or styrenic- homopolymer or copolymer having a Tg of greater than 50°C, preferably of greater than 80°C, or polystyrene, or an acrylic/styrene or methacrylic/styrene copolymer;
- B is an acrylic- or methacrylic- homopolymer or copolymer having a Tg of less than 20°C.

Preferably, in the block A the monomer is chosen from methyl methacrylate (MMA), phenyl methacrylate, benzyl methacrylate, isobornyl methacrylate, styrene (Sty) or alpha-methylstyrene or mixtures thereof. More preferably, the block A is PMMA or PMMA copolymerized with acrylic or methacrylic comonomers or polystyrene (PS) or PS modified with styrenic comonomers.

Preferably the block B comprises monomers chosen of methyl acrylate, ethyl acrylate, butyl acrylate (BuA), ethylhexyl acrylate or butyl methacrylate and mixtures thereof, more preferably butyl acrylate said monomers make up at least 50wt%, preferably 70wt% of block B.

Furthermore, the blocks A and/or B can comprise other acrylic or methacrylic comonomers carrying various chemical function groups known to a person skilled in the art, for example acid, amide, amine, hydroxyl, epoxy or alkoxy functional groups. The block A can also incorporate groups, such as acrylic acid (AA) or methacrylic acid (MAA), in order to increase the thermal resistance of thereof.

Comonomers like styrene can also be incorporated in the block B in order to mismatch the refractive index of the block A.

Preferably, said thermoplastic acrylic block copolymer has a structure chosen from: ABA, AB, A₃B and A₄B.

The thermoplastic acrylic block copolymer for example can be one of the following triblock copolymers: pMMA-pBuA-pMMA, p(MMAcoMAA)-pBuA-p(MMAcoMAA), pMMA-p(BuAcoSty)-pMMA, p(MMAcoMAA)-p(BuAcoSty)-p(MMAcoMAA)and pMMA-p(BuAcoAA)-pMMA. In a first preferred embodiment, the block copolymer is pMMA-pBuA-pMMA.

It is also known to a person skilled in the art that the polymers of PMMA type can comprise small amounts of acrylate comonomer in order to improve the thermal stability thereof. By small is meant less than 9wt%, preferably less than 7wt% and more preferably less than 6wt%.

The block B represents from 10wt% to 85wt% of the total weight of the block copolymer, preferably 25wt% to 75wt% and more preferably from 35wt% to 65wt%.

The block B has a weight-average molar mass of between 10 000 g/mol and 500 000 g/mol, preferably from 20 000 g/mol to 300 000 g/mol.

The block copolymers participating in the composition of the matrix can be obtained by controlled radical polymerization (CRP) or by anionic polymerization; the most suitable process according to the type of copolymer to be manufactured will be chosen.

Preferably, this will be CRP, in particular in the presence of nitroxides, for the block copolymers of (A)ₙB type and anionic or nitroxide radical polymerization, for the structures of ABA type, such as the triblock copolymer MAM.

The (meth)acrylic composition MC1 according to one aspect of the invention also comprises between 100ppm and 10000ppm of an accelerator. Preferably from 200ppm to 8000 ppm by weight and advantageously from 300ppm to 6000 ppm.

The accelerator is chosen from tertiary amines such as N,N-dimethyl-p-toluidine (DMPT), N,N-dihydroxyethyl-p-toluidine (DHEPT), organic-soluble transition metal catalysts or mixtures thereof.

The (meth)acrylic composition MC1 according to one aspect of the invention also comprises a polymerization initiator, the function of which is to ensure the start of polymerization of the (meth)acrylic monomer M1.

The polymerization initiator may be chosen from organic peroxides, peroxy esters, peroxy acetals and azo compounds.

The polymerization initiator may in particular be chosen from diacyl peroxides, peroxy esters, peroxydicarbonates, dialkyl peroxides, peroxyacetals, hydroperoxide or peroxyketale.

In one embodiment, the polymerization initiator is chosen from benzoyl peroxide.

In another embodiment the polymerization initiator is chosen from diisobutyryl peroxide, cumyl peroxyneodecanoate, di(3-methoxybutyl) peroxydicarbonate ,1,1,3,3-Tetramethylbutyl peroxyneodecanoate, cumyl peroxyneoheptanoate, di-n-propyl peroxydicarbonate, tert-amyl peroxyneodecanoate, , di-sec-butyl peroxydicarbonate, diisopropyl peroxydicarbonate, di(4-tert-butylcyclohexyl) peroxydicarbonate, di-(2-ethylhexyl)-peroxydicarbonate, tert-amyl peroxyneodecanoate, tert-butyl peroxyneodecanoate, di-n-butyl peroxydicarbonate, dicetyl peroxydicarbonate, dimyristyl peroxydicarbonate, 1,1,3,3-tetramethylbutylperoxypivalate, tert-butyl peroxyneoheptanoate, tert-amyl peroxypivalate, tert-butyl peroxypivalate, di-(3,5,5-trimethylhexanoyl)-peroxide, dilauroyl peroxide, didecanoyl peroxide, 2,5-dimethyl-2,5-di(2-ethylhexanoylperoxy)-hexane, 1,1,3,3-tetramethylbutyl peroxy-2-ethylhexanoate, tert-amyl peroxy-2-ethylhexanoate, dibenzoyl peroxide, tert-butyl peroxy-2-ethylhexanoate, tert-butyl peroxydiethylacetate, tert-butyl peroxyisobutyrate, 1,1-di-(tert-butylperoxy)-3,3,5-trimethylcyclohexane, 1,1-di(tert-amylperoxy)cyclohexane, 1,1-di-(tert-butylperoxy)-cyclohexane, tert-amyl peroxy-2-ethylhexylcarbonate, , tert-amyl peroxyacetate, tert-butyl peroxy-3,5,5-trimethylhexanoate, 2,2-di-(tert-butylperoxy)-butane, tert-butyl peroxyisopropylcarbonate, tert-butyl peroxy-2-ethylhexylcarbonate, tert-amyl peroxybenzoate, tert-butyl peroxyacetate, butyl 4, 4-di (tert-butylperoxy) valerate, tert-butyl peroxybenzoate, di-tert-amylperoxide, dicumyl peroxide, di-(2-tert-butyl-peroxyisopropyl)-benzene, 2,5-dimethyl-2,5-di-(tert-butylperoxy)-hexane, tert-butylcumyl peroxide, 2,5-dimethyl-2,5-di(tert-butylperoxy)hexyne-3, di-tert-butyl peroxide, 3,6,9-triethyl-3,6,9-trimethyl-1,4,7-triperoxonane, 2,2'-azobisisobutyronitrile (AIBN), 2,2'-azodi-(2-methylbutyronitrile), azobisisobutyramide, 2,2'-azobis(2,4-dimethylvaleronitrile), 1,1'-Azodi(hexahydrobenzonitrile), or 4,4'-azobis(4-cyanopentanoic).

The (meth)acrylic composition MC1 according to the invention may comprise from 0.01 part by weight to 5 parts by weight of polymerization initiator.

According to a particular embodiment, the (meth)acrylic composition MC1 according to the invention comprises from 0.02 part by weight to 4 parts by weight and advantageously 0.03 part by weight to 3 parts by weight of polymerization initiator per 100 parts by weight of the liquid (meth)acrylic syrup.

That which has just been described for a polymerization initiator is entirely transposable to an initiator system, such a system consisting of a polymerization initiator and a polymerization activator or accelerator.

The (meth)acrylic composition MC1 according to the invention may also effectively further according to certain aspects comprise a polymerization activator or accelerator.

According to a particular embodiment, the (meth)acrylic composition according to the invention comprises between 100ppm and 10 000ppm, advantageously between 100ppm and 7 000pmm and preferably between 200ppm and 5 000ppm of polymerization activator or accelerator per 100 parts by weight of the (meth)acrylic syrup.

The present invention according to the third and fourth aspect, relates also to a process for preparing a (meth)acrylic composition MC1.

According to the invention, this process comprises the steps: i) providing the components (a) to (b) or (a) to (d), ii) adding component(s) (b) or (b) to (d) to (a) and ii) mixing the components (a) to (b) or a) to (d) .

Step iii) of the preparing process according to the invention is performed by mixing all of the components included in the (meth)acrylic composition MC1, care being taken to prepare, firstly, the liquid (meth) acrylic syrup and then to introduce, into this (meth)acrylic syrup, impact modifier IM1 and, where appropriate, the polymerization activator or accelerator, the polymerization initiator being introduced last.

This mixing may be manual or may be performed using a mixing means.

Optionally, the mixing is performed by stirring, and for a time of between 1 minutes and 6 hours, advantageously between 2 minutes and 2 hours, more advantageously between 3 minutes and 1 hour and preferentially between 4 minutes and 1 hour.

The manufacturing process according to the invention is thus a process that is particularly simple to perform and which may be readily performed in the current facilities dedicated to the manufacture of (meth)acrylic composition MC1.

The (meth)acrylic composition MC1 comprising the compounds (a) to (b) or (a) to (d) has a viscosity between 50mPa*s and 10 000 Pa*s at 23°C.

Preferably the viscosity of (meth)acrylic composition MC1 comprising the compounds a) to d) at 25°C is in a range from 50 mPa*s to 2000 mPas.

The (meth)acrylic composition MC1 according to the invention, may be used for prepare a material having a low dielectric constant.

An additional aspect of the present invention is a (meth)acrylic thermoplastic polymeric composition MTPC1 prepared by polymerization of the (meth)acrylic composition MC1.

Still another aspect of the present invention relates to a process to prepare a (meth)acrylic thermoplastic polymeric composition MTPC1.

Still another aspect of the present invention relates to process to prepare a (meth)acrylic thermoplastic polymeric composition MTPC1 having a low dielectric constant.

Said process to prepare the (meth)acrylic thermoplastic polymeric composition MTPC1 is comprising the following steps:
(i) providing a (meth)acrylic composition MC1 as defined before,
(ii) optionally filling or pouring the (meth)acrylic composition MC1 into a cavity (30),
(iii)polymerizing the (meth)acrylic composition MC1.

The different embodiments of provided (meth)acrylic composition MC1 and its respective components can be combined in any combination.

In a first preferred embodiment of the process to prepare a (meth)acrylic thermoplastic polymeric composition, the cavity (30) is part of a mold.

In a second preferred embodiment of the process to prepare a (meth)acrylic thermoplastic polymeric composition, step (ii) consists in transferring (meth)acrylic composition MC1 into a mold.

In a third preferred embodiment of the process to prepare a (meth)acrylic thermoplastic polymeric composition, step (ii) consists in transferring (meth)acrylic composition MC1 into a closed mold.

The second and third preferred embodiment of the process to prepare a (meth)acrylic thermoplastic polymeric composition can comprise the additional steps of applying a vacuum in the outlet of the mold and applying slight air pressure for transferring (meth)acrylic composition MC1 into a mold.

The (meth)acrylic thermoplastic polymeric composition MTPC1 according to the invention may be used for a material having a low dielectric constant.

Still another aspect of the present invention relates to a (meth)acrylic thermoplastic polymeric composition MTPC1 comprising a filler FI1 or a fibrous material FM.

Still another aspect of the present invention relates to a (meth)acrylic thermoplastic polymeric composition MTPC1 having a low dielectric constant comprising a filler FI1 or a fibrous material FM.

The filler FI1 can be in form of particles. Mention may be made of glass beads, hollow glass microspheres, inorganic compounds, such as minerals and salts. The inorganic compound is including quartz, granite, marble, feldspar, clay, ceramics, mica, graphite, silicates, carbonates, sulfates, silicates, phosphates, hydroxides, metallic oxides or combinations of two or more thereof. As specific compound there may be cited calcium carbonate (CaCO₃), silica (SiO₂), alumina hydroxide (AlOH₃), magnesium hydroxide.

In one specific embodiment the (meth)acrylic thermoplastic polymeric composition MTPC1comprises between 0.01 phr by weight and 300 phr by weight of the filler F1 for 100 parts of (meth)acrylic thermoplastic polymer.

Concerning the fibrous material FM, can be mention may be made of several fibres, uni directional rovings or continuous filament mat, fabrics, felts or nonwovens that may be in the form of strips, laps, braids, locks or pieces. The fibrous material may have various forms and dimensions, either one-dimensional, two-dimensional or three-dimensional. A fibrous substrate comprises an assembly of one or more fibres.

The origins of the fibrous material may be natural or synthetic. As natural material one can mention plant fibres, wood fibres, animal fibres or mineral fibres.

Natural fibres are, for example, sisal, jute, hemp, flax, cotton, coconut fibres, and banana fibres. Animal fibres are, for example, wool or hair.

As synthetic material, mention may be made of polymeric fibres chosen from fibres of thermosetting polymers, of thermoplastic polymers or mixtures thereof.

The polymeric fibres may consist of polyamide (aliphatic or aromatic), polyester, polyvinyl alcohol, polyolefins as polypropylene, polyurethanes, polyvinyl chloride, polyethylene, unsaturated polyesters, epoxy resins and vinyl esters.

The mineral fibres may also be chosen from glass fibres, especially of E, R or S2 type, carbon fibres, boron fibres or silica fibres.

The fibrous substrate of the present invention is chosen from plant fibres, wood fibres, animal fibres, mineral fibres, synthetic polymeric fibres, glass fibres and carbon fibres, and mixtures thereof

Still another aspect of the present invention relates to a (meth)acrylic composite material MCM1 comprising the (meth)acrylic thermoplastic polymeric composition MTPC1.

In a first preferred embodiment the (meth)acrylic composite material MCM1 is a fiber reinforced (meth)acrylic composite material.

In a second preferred embodiment the (meth)acrylic composite material MCM1 is a particle reinforced (meth)acrylic composite material.

In a third preferred embodiment the (meth)acrylic composite material MCM1 is a glass particle reinforced (meth)acrylic composite material. In one preferred embodiment the glass particles are hollow glass beads or hollow glass microspheres.

The present invention relates in an additional aspect to an article or object comprising the (meth)acrylic composite material MCM1 or comprising the (meth)acrylic thermoplastic polymeric composition MTPC1.

According to an embodiment of the invention, the article or object is obtained by polymerization of a (meth)acrylic composition MC1 in a mold.

According to another embodiment of the invention, moulded part MP1 is obtained by polymerization of a (meth)acrylic composition MC1 in a mold.

The article or object or molded part according to the invention may be used in many sectors and notably in the housing, motor vehicle, railway, sports, aeronautical industry, aerospace, photovoltaic or wind power sector, and in marine applications and medical applications.

More specifically the article or object or molded part according to the invention may be used in electronic and electrical engineering, electronic integration, printed circuit board and communication materials.

By way of example following objects or articles may comprise a moulded part MP1: objects for telecommunication and signal transmission.

### [Methods]

The weight-average molecular weight may be measured by size exclusion chromatography (SEC) .The chromatography column is calibrated with PMMA standards having a molecular weight between 402g/mol and 1 900 000 g/mol. The average molecular weight is expressed in g/mol for the number and average molecular weight Mn and Mw respectively. For the measurement, the concentration is 1g/L.

The viscosity of the (meth)acrylic compositions comprising at least the components a1) and a2) is measured with a Brookfield viscosimeter at 25°C, according to ISO 2555:2018 "Plastics - Resins in the liquid state or as emulsions or dispersions - Determination of apparent viscosity using a single cylinder type rotational viscometer method".

As dielectric properties as the relative permittivity εᵣ and the loss tangent tanδ are measured. The loss tangent represents the ratio of the imaginary part to the real part of the complex permittivity. The loss tangent is also called by terms such as tangent loss, dissipation factor or loss factor. As testing equipment, a E4991A RF impedance/material Analyzer is used with a dielectric material test fixture employs the parallel plate method for dielectric constant and loss tangent measurements up to 1.5 GHz.

### [Examples]

The compounds used for the preparation of the various (meth)acrylic compositions are the following:
- as (meth)acrylic polymer P1:
   a PMMA formed by a copolymer of methyl methacrylate and of ethyl acrylate, from company Altuglas under the name Altuglas^{®} BS 520B,
- as (meth)acrylic monomer M1: a methyl methacrylate stabilized with hydroquinone monomethyl ether,
- as initiator benzoyl peroxide (BPO) is used,
- as accelerator N,N-dihydroxyethyl-p-toluidine (DHEPT)is used,
- as impact modidier: Nanostrenght^{®} M52N a (meth)acrylic block copolymer from company ARKEMA.

A syrup S1 is prepared by first dissolving 20 parts by weight of the PMMA (BS520 a copolymer of MMA comprising ethyl acrylate as a comonomer) as P1 in 80 parts by weight of methyl methacrylate as (meth)acrylic monomer M1, which is stabilized with MEHQ (hydroquinone monomethyl ether). The syrup S1 has a viscosity of 104m*Pas at 23°C.

Syrup S1 is used to prepare the composition of the examples of the invention and comparative examples by adding additional compounds.

To 100 parts of syrup S1 then 0.4 parts of N,N-dihydroxyethyl-p-toluidine are added.

For the examples according to the invention Nanostrenght^{®} M52N is added in quantities indicated in table 1.

Just before polymerization 2 parts of benzoyl peroxide is added.

**Table 1 - prepared compositions in phr if not indicated otherwise**

| | Quantity / [phr] | | | |
|---|---|---|---|---|
| | Example 1 | Example 2 | Example 3 | Comparative example |
| Syrup S1 | 100 | 100 | 100 | 100 |
| Impact Modifier | 3 | 6.5 | 3.6 | 0 |
| accelerator | 0.4 | 0.4 | 0.4 | 0.4 |
| Initiator | 2 | 2 | 2 | 2 |

The mixtures from table 1 are polymerized. Polymerization is made in a mold to obtain sheets.

The sheets are tested for dielectrical properties and impact resistance. The relative permittivity εᵣ at 1GHz. Impact test by falling steel ball (2.08ch diameter, 535g) from 1m height.

The following obtained results are as summarized in table 2.

**Table 2 - Characteristics of obtained polymerized compositions**

| | Example 1 | Example 2 | Example 3 | Comparative example |
|---|---|---|---|---|
| relative permittivity εᵣ | 2.66 | 2.78 | 2.77 | 2.54 |
| Impact | No crack | No crack | No crack | cracks |

According to the composition of the examples, a low dielectric constant is kept while having improved impact properties.

## Claims

1. A (meth)acrylic composition MC1 comprising:
(a) 100 parts by weight of a liquid (meth)acrylic syrup comprising:
(a₁) from 1% by weight to 50% by weight of one or more (meth)acrylic polymers P1, and
(a₂) from 50% by weight to 99% by weight of one or more (meth)acrylic monomers M1, each monomer M1 comprising only one (meth)acrylic function per monomer,
(b) optionally from 0.5 parts by weight to 25 parts by weight of an impact modifier IM1,
(c) optionally from 0.01 part by weight to 5 parts by weight of a polymerization initiator
(d) optionally between 100ppm and 10000ppm of an accelerator.

2. The (meth)acrylic composition MC1 according to claim 1, **characterized in that** it comprises,
(c) from 0.01 part by weight to 5 parts by weight of a polymerization initiator
(d) between 100ppm and 10000ppm of an accelerator.

3. The (meth) acrylic composition MC1 according to claim 1 or 2, **characterized in that** the impact modifier IM1 is chosen from a block copolymer BC1.

4. The composition according to claim 3, **characterized in that** the block copolymer BC1 comprises at least one block having a glass transition temperature Tg less than 20°C preferably less than 10°C and more preferably less than 0°C.

5. The composition according to claim 3, **characterized in that** the block copolymer BC1 is a thermoplastic block copolymer TBC1 and preferably a thermoplastic acrylic block copolymer.

6. The composition according to claim 3, **characterized in that** the block copolymer BC1 thermoplastic acrylic block copolymer is having a general formula (A)ₙB in which:
• n is an integer of greater than or equal to 1,
• A is: an acrylic- or methacrylic- or styrenic- homopolymer or copolymer having a Tg of greater than 50°C, preferably of greater than 80°C, or polystyrene, or an acrylic/styrene or methacrylic/styrene copolymer;
• B is an acrylic- or methacrylic- homopolymer or copolymer having a Tg of less than 20°C.

7. The composition according to claim 3, **characterized in that** the block copolymer BC1 is chosen from one of the following triblock copolymers: pMMA-pBuA-pMMA, p(MMAcoMAA)-pBuA-p(MMAcoMAA), pMMA-p(BuAcoSty)-pMMA, p(MMAcoMAA)-p(BuAcoSty)-p(MMAcoMAA)and pMMA-p(BuAcoAA)-pMMA.

8. The composition according to any of claims 1 to 7, **characterized in that** the liquid (meth)acrylic syrup has a viscosity between 10m*Pas and 10 000 mPa*s at 25°C.

9. The composition according to any of claims 1 to 8, **characterized in that** the (meth)acrylic polymer P1 has weight-average molecular weight M_{w} greater than 40 000 g/mol.

10. A process to prepare the (meth)acrylic composition MC1 according to any of claims 1 to 9, comprising the following steps:
(i) providing component (a) a liquid (meth)acrylic syrup comprising
(a₁) from 1% by weight to 50% by weight of one or more (meth)acrylic polymers P1, and
(a₂) from 50% by weight to 99% by weight of one or more (meth)acrylic monomers M1, each monomer M1 comprising only one (meth)acrylic function per monomer,
(ii) adding for 100 parts of (a) component (b) from 0.5 parts by weight to 25 parts by weight of an impact modifier IM1,
optionally component (c) from 0.01 part by weight to 5 parts by weight of a polymerization initiator and optionally component(d) between 100ppm and 10 000ppm of an accelerator (iii) mixing the components (a) to (b) or (a) to (d).

11. Use of the (meth) acrylic composition MC1 according to any of claims 1 to 9 to prepare a material having a low dielectric constant.

12. A (meth)acrylic thermoplastic polymeric composition MTPC1 prepared by polymerization of the (meth)acrylic composition MC1 according to any of claims 1 to 9.

13. The (meth)acrylic thermoplastic polymeric composition MTPC1 comprising a filler FI1 or a fibrous material FM.

14. Use of the (meth)acrylic thermoplastic polymeric composition MTPC1 according to claim 12 or 13 as a material having a low dielectric constant.

15. A process to prepare a (meth)acrylic thermoplastic polymeric composition MTPC1 comprising the following steps:
(i) providing a (meth)acrylic composition MC1 according to any of claims 1 to 9,
(ii) optionally filling or pouring the (meth)acrylic composition MC1 into a mould,
(iii) polymerizing the (meth)acrylic composition MC1.

16. A (meth)acrylic composite material MCM1 comprising the (meth)acrylic thermoplastic polymeric composition MTPC1 according to claim 12 or 13.

17. An article or object or molded part comprising the (meth)acrylic composite material MCM1 according to claim 16 or comprising the (meth)acrylic thermoplastic polymeric composition MTPC1 according to claim 12 or 13.

18. The article or object or molded object according to claim 17 integration, printed circuit board and communication materials.
